(19) Europäisches Patentamt
European Patent Office
Office européen des brevets

(11) **EP 2 530 829 B1**

## (12) EUROPEAN PATENT SPECIFICATION

(45) Date of publication and mention
of the grant of the patent:
**10.06.2020 Bulletin 2020/24**

(51) Int Cl.:
*H02P 21/00* [(2016.01)]   *H02P 21/04* [(2006.01)]
*H02P 7/295* [(2016.01)]

(21) Application number: **12164897.6**

(22) Date of filing: **20.04.2012**

(54) **Motor control unit and vehicle steering system**

Motorsteuereinheit und Fahrzeuglenksystem

Unité de commande de moteur et système de direction de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2011 JP 2011100896**

(43) Date of publication of application:
**05.12.2012 Bulletin 2012/49**

(73) Proprietor: **JTEKT Corporation
Osaka-shi
Osaka 542-8502 (JP)**

(72) Inventors:
• **Tomita, Akihiro**
  **Osaka-shi,, Osaka 542-8502 (JP)**
• **Hasegawa, Jun**
  **Osaka-shi,, Osaka 542-8502 (JP)**
• **Nambu, Akira**
  **Osaka-shi,, Osaka 542-8502 (JP)**

(74) Representative: **TBK
Bavariaring 4-6
80336 München (DE)**

(56) References cited:
**EP-A1- 2 282 401     WO-A1-2010/087224
JP-A- 2000 350 489     JP-A- 2008 206 290**

**Description**

BACKGROUND OF THE INVENTION

1. Field of the Invention

The invention relates to a motor control unit and a vehicle steering system.

2. Description of Related Art

There is a conventional motor control method employed in a motor control unit used in, for example, a vehicle steering system that includes a steering force assisting device that applies steering assist force to a steering system. According to the motor control method, a brushless motor serving as a driving source that produces steering assist force is controlled using a motor rotation angle (estimated motor rotation angle) estimated based on, for example, another physical quantity ,without measuring a motor rotation angle using a rotation angle sensor such as a resolver. An example of such sensorless control that does not require a rotation angle sensor is described in, for example, Japanese Patent Application Publication No. 2011-51537 (JP 2011-51537 A). According to JP 2011-51537 A, an amount of change in motor rotation angle is calculated in each calculation period based on inductive voltage, and current feedback control is executed in a rotating coordinate system that rotates in accordance with an estimated motor rotation angle obtained by accumulating the change amounts. In this way, a brushless motor is driven.

In a vehicle steering system described in JP 2011-51537 A, on the basis of the fact that the motor rotates in accordance with the rotation of a steering wheel and the steering wheel rotates in the direction of steering torque, the sign of a change amount (motor rotation direction) is determined based on the direction of steering torque when an estimated motor rotation angle is calculated. The estimated motor rotation angle is updated by adding or subtracting, depending on the direction of steering torque, a change amount to or from the estimated motor rotation angle in the immediately preceding calculation period (immediately preceding value).

However, in some vehicle travelling conditions, the steering wheel sometimes does not rotate in the direction of steering torque. This problem will be described below. When a driver steers the steering wheel to change the vehicle travelling direction, the steering wheel rotates in the direction of steering torque. After the vehicle travelling direction has changed to a certain extent, the driver reduces steering force applied to the steering wheel and returns the steering wheel using self-aligning torque corresponding to a road surface friction force. At this time, if the driver grips the steering wheel lightly, steering torque acts in such a direction that the steering wheel is prevented from being returned. That is, the steering wheel rotates in the direction opposite to the direction of steering torque. Therefore, if the sign of a change amount is uniquely determined based on the direction of steering torque as described in JP 2011-51537 A, an estimated motor rotation angle may deviate from an actual motor rotation angle.

If such a motor control unit is used to control a vehicle steering system, for example, vibrations may occur, resulting in a decrease in steering feel. In this respect, there is still room for improvement. Such a problem occurs due to a deviation of an estimated motor rotation angle from an actual motor rotation angle. Therefore, even when a motor used in a purpose other than a driving source of a vehicle steering system is controlled, problems such vibrations may occur.

Document EP 2 282 401 A1 discloses a motor control unit as defined in the preamble of claim 1. In particular, a motor control device comprising a rotation angle detection means is described. If no abnormality in a rotation angle detecting means is detected, the motor is controlled on the basis of a rotation angle signal outputted from the rotation angle detecting means. However, if an abnormality in the rotation angle detecting means is detected, the motor is controlled on the basis of an estimated rotation angle signal.

SUMMARY OF THE INVENTION

It is an object of the invention to provide a motor control unit with which the above-described problem is solved, and a vehicle steering system that includes the motor control unit.

This object is solved by motor control unit as set out in claim 1.

The axis inductive voltage values of the first and second coordinate axes each change in a sinusoidal waveform in accordance with the rotation of the motor. The waveform of the axis inductive voltage value of the first coordinate axis and the waveform of the axis inductive voltage value of the second coordinate axis have a phase difference of 90° in electric angle. Therefore, it is possible to estimate in which of the four regions (angular ranges), obtained by dividing a plane of coordinates into four regions at intervals of 90°, the motor rotation angle is located, that is, it is possible to estimate the rough rotational position of the motor, based on the combination of the signs of the axis inductive voltage values. Because the rough rotational position is detectable in four sections or more, it is possible to estimate the rotation direction of the motor based on a change in the rough rotational position. As described above, the sign of the change amount of the motor rotation angle is determined depending on the rotation direction based on the axis inductive voltage values that change in accordance with the rotation of the motor. Therefore, according to the aspect of the invention described above, it is possible to accurately estimate the motor rotation angle, as compared with the case where the sign of the change amount is determined based on a parameter of which the relation with the rotation direction of the motor is not constant, such as the steering torque. In the above configuration, the rotation direction of the motor is estimated according to the rough rotational position estimated based on the combination of the signs of the axis inductive voltage values. Therefore, the calculation load is low as compared with the case where the rotation direction is estimated through complex calculation using, for example, a trigonometric function.

In the motor control unit according to the above aspect, the rough rotational position estimation unit estimates the rough rotational position based on, in addition to the combination of the signs of the axis inductive voltage values, a magnitude relation between the axis inductive voltage value of the first coordinate axis and the axis inductive voltage value of the second coordinate axis.

As described above, the axis inductive voltage values change in sinusoidal waveforms having a phase difference of 90°. Therefore, it is possible to estimate in which of two regions, obtained by equally dividing each of the above-described four regions into two regions, the motor rotation angle is located based on the magnitude relation between the axis inductive voltage value of the first coordinate axis and the axis inductive voltage value of the second coordinate. In the above configuration, it is possible to estimate in which of the eight regions, obtained by dividing the plane of coordinates into eight regions at intervals of 45° in electric angle, the motor rotation angle is located. Therefore, the rough rotational position of the motor may be detected in eight sections or more. The angular range of the rough rotational position is divided into more regions than those in the case where the rough rotational position of the motor is estimated based only on the combination of the signs. This makes it possible to quickly estimate the rotation direction of the motor. In the above configuration, the rotation direction of the motor is estimated according to the rough rotational position estimated based on the combination of the signs of the axis inductive voltage values and the magnitude relation between the axis inductive voltage values. Therefore, the calculation load is low as compared with the case where the rotation direction is estimated through complex calculation using, for example, a trigonometric function.

In the motor control unit according to the above aspect, as thresholds at which the signs of the axis inductive voltage values change, a negative-side threshold used when each of the signs changes from positive to negative may be set to be smaller than zero, and a positive-side threshold used when each of the signs changes from negative to positive may be set to be larger than zero.

The axis inductive voltage values sometimes do not change in a smooth sinusoidal waveform due to the influence of, for example, noise, and change in a turbulent waveform. If the waveforms of the axis inductive voltage values become turbulent around zero, there is a possibility that the signs of the axis inductive voltage values change irrespective of a change in an actual motor rotation angle and the rough rotational position changes. As a result, the rotation direction of the motor may be erroneously estimated.

In the above configuration, the threshold used when each of the signs of the axis inductive voltage values changes from positive to negative is different from the threshold used when each of the signs of the axis inductive voltage values change from negative to positive. That is, hysteresis is provided for changes in the signs of the axis inductive voltage values. Therefore, even when the waveforms of the axis inductive voltage values become turbulent around zero due to the influence of, for example, noise, the signs of the axis inductive voltage values $e\alpha$ and $e\beta$ are hard to change. Thus, it is possible to prevent the rotation direction of the motor from being erroneously estimated, and therefore it is possible to estimate the motor rotation angle with high accuracy.

The motor control unit according to the above aspect may be provided in a vehicle steering system. With the above configuration, even if the direction of steering torque does not coincide with the rotation direction of the steering wheel, it is possible to accurately estimate the motor rotation angle. Therefore, it is possible to provide a vehicle steering system with which, for example, a decrease in steering feel is suppressed.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic configuration diagram of a vehicle steering system (EPS);
FIG. 2 is a control block diagram of an electronic control unit (ECU);
FIG. 3 is a control block diagram of an estimated motor rotation angle calculation unit;
FIG. 4 is a flowchart that shows the procedure of estimated motor rotation angle calculation executed by the estimated motor rotation angle calculation unit;
FIG. 5 is a graph that shows the correlation between an $\alpha$-axis inductive voltage value and a $\beta$-axis inductive voltage value, and a motor rotation angle (electric angle);
FIG. 6 is a graph that shows the correlation between rotation of an inductive voltage vector and a rough rotational position of a motor in an $\alpha/\beta$ coordinate system;
FIG. 7 is a correspondence table that shows the relation among signs of the $\alpha$-axis inductive voltage value and the $\beta$-axis inductive voltage value, the magnitude relation between the absolute values thereof, and the rough rotational position of the motor;

FIG. 8 is a flowchart that shows the procedure of motor rotation direction estimation executed by a motor rotation direction estimation unit; and

FIG. 9 is a graph for illustrating a change in the sign of the α-axis inductive voltage value and a change in the sign of the β-axis inductive voltage value.

DETAILED DESCRIPTION OF EMBODIMENTS

Hereafter, an embodiment in which the invention is applied to a vehicle steering system including a steering force assisting device will be described with reference to the accompanying drawings.

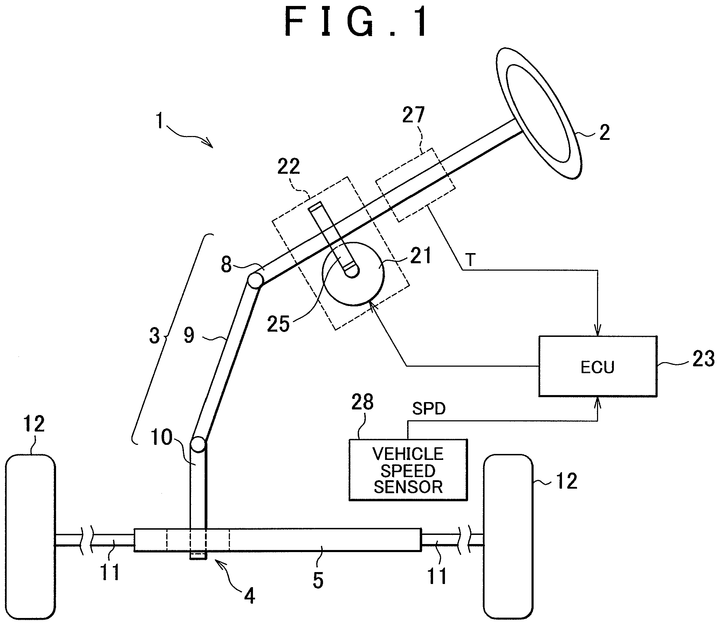

In a vehicle steering system (EPS) 1 shown in FIG. 1, a steering shaft 3 to which a steering wheel 2 is fixed is coupled to a rack shaft 5 via a rack and pinion mechanism 4. The rotation of the steering shaft 3 resulting from an operation on the steering wheel 2 is converted to a reciprocal linear motion of the rack shaft 5 by the rack and pinion mechanism 4. The steering shaft 3 is formed by coupling a column shaft 8, an intermediate shaft 9, and a pinion shaft 10 to each other. The reciprocal linear motion of the rack shaft 5 resulting from the rotation of the steering shaft 3 is transmitted to knuckles (not shown) via tie rods 11 coupled to respective ends of the rack shaft 5. Thus, the steered angle of steered wheels 12 is changed, that is, the traveling direction of a vehicle is changed.

The EPS 1 includes an EPS actuator 22 and an ECU 23. The EPS actuator 22 serves as a steering force assisting device that applies assist force for assisting a steering operation to a steering system, using a motor 21 as a driving source. The ECU 23 serves as a motor control unit that controls the operation of the EPS actuator 22 and a steering control unit.

The EPS actuator 22 is configured as a column assist-type EPS actuator. The motor 21 is drivingly-coupled to the column shaft 8 via a reduction mechanism 25 formed of, for example, a worm and a worm wheel (worm & wheel). The motor 21 rotates in accordance with the rotation of the steering wheel 2 and steering shaft 3, and the relation between the rotation direction of the steering wheel 2 and the rotation direction of the motor 21 is always the same. A brushless motor is employed as the motor 21 in the present embodiment, and is driven by three-phase (U, V and W) driving currents supplied from the ECU 23. The EPS actuator 22 reduces the speed of rotation of the motor 21, and then transmits the rotation with the reduced speed to the column shaft 8, thereby applying the motor torque to the steering system as assist force.

A torque sensor 27 and a vehicle speed sensor 28 are connected to the ECU 23. The torque sensor 27 detects a steering torque T. The vehicle speed sensor 28 detects a vehicle speed SPD. The steering torque T detected by the torque sensor 27 in the present embodiment is a positive value when the direction of the steering torque T is the clockwise direction, and is a negative value when the direction of the steering torque T is the counterclockwise direction. The ECU 23 calculates a target assist force based on the steering torque T and the vehicle speed SPD, and supplies driving electric current to the motor 21 to generate a motor torque corresponding to the target assist force, thereby controlling the operation of the EPS actuator 22.

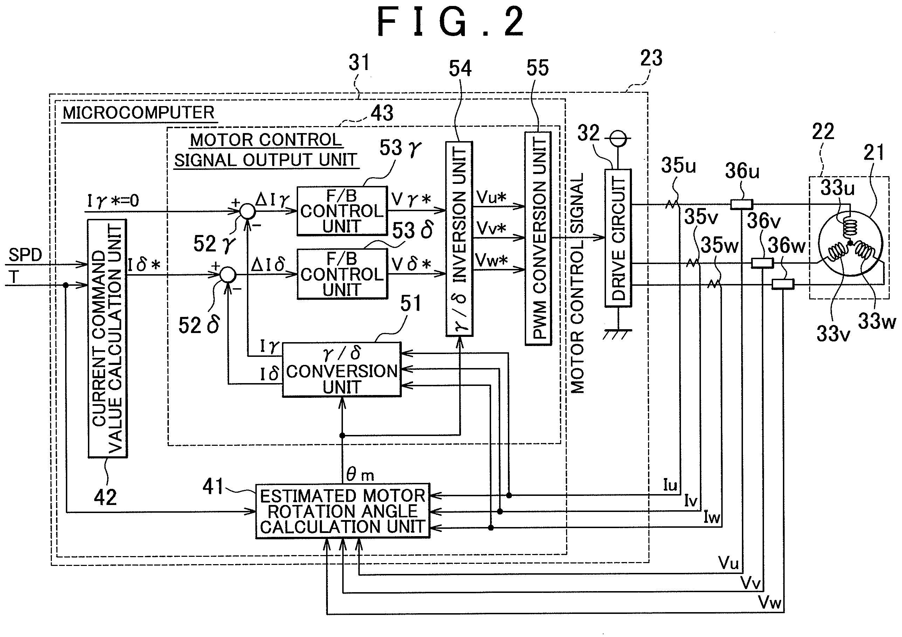

Next, the electrical configuration of the EPS 1 according to the present embodiment will be described. As shown in FIG. 2, the ECU 23 includes a microcomputer 31 and a drive circuit 32. The microcomputer 31 serves as a motor control signal output unit that outputs motor control signals. The drive circuit 32 supplies three-phase driving currents to the motor 21 based on the motor control signals output from the microcomputer 31. Control blocks described below are implemented according to computer programs executed by the microcomputer 31. The microcomputer 31 detects state quantities in a predetermined sampling period, and executes calculation processes shown in the following control blocks in a predetermined calculation period, thereby outputting the motor control signals.

A known PWM inverter is employed as the drive circuit 32. The PWM inverter is formed as follows. A pair of switching elements connected in series with each other is used as a base unit (switching arm). Three switching arms corresponding to motor coils 33u, 33v and 33w of the respective phases are connected in parallel with one another to form the PWM inverter. The motor control signals output from the microcomputer 31 define the on/off states of the respective phase switching elements that constitute the drive circuit 32 (the on duty ratios of the respective switching arms). The drive circuit 32 operates in response to reception of the motor control signals, and supplies three-phase driving currents based on the applied power supply voltage.

In addition, the ECU 23 is provided with current sensors 35u, 35v and 35w and voltage sensors 36u, 36v and 36w. The current sensors 35u, 35v and 35w are respectively used to detect the phase current values Iu, Iv and Iw of the motor 21. The voltage sensors 36u, 36v and 36w are respectively used to detect the phase voltage values Vu, Vv and Vw of the motor 21. The microcomputer 31 includes an estimated motor rotation angle calculation unit 41 that serves as an estimated motor rotation angle calculator that calculates an estimated motor rotation angle $\theta m$ based on the phase current values Iu, Iv and Iw and the phase voltage values Vu, Vv and Vw. The microcomputer 31 executes sensorless control for driving the motor 21 based on the estimated motor rotation angle $\theta m$ calculated by the estimated motor rotation angle calculation unit 41 without detecting a motor rotation angle with the use of a rotation angle sensor.

The microcomputer 31 includes a current command value calculation unit 42, and a motor control signal output unit 43. The current command value calculation unit 42 calculates a target value of electric power that is supplied to the motor 21, that is, a current command value (δ-axis current command value Iδ*) that corresponds to a target assist force. The motor control signal output unit 43 outputs motor control signals based on the current command value.

The steering torque T and the vehicle speed SPD are input into the current command value calculation unit 42. The current command value calculation unit 42 calculates, as a current command value, the δ-axis current command value Iδ* in a two-phase rotating coordinate system (γ/δ coordinate system) according to the estimated motor rotation angle θm based on the steering torque T and the vehicle speed SPD, and outputs the current command value to the motor control signal output unit 43. The γ/δ coordinate system is a coordinate system that rotates together with a rotor (not shown), and is defined by a γ axis that extends along the direction of magnetic flux generated by a field magnet (magnet) provided at the rotor, and a δ axis perpendicular to the γ axis.

The current command value calculation unit 42 calculates the δ-axis current command value Iδ* having a larger value (absolute value), as the absolute value of the steering torque T is larger or as the vehicle speed SPD is lower. In the present embodiment, a dead band is set. In the dead band, when the absolute value of the detected steering torque T is smaller than or equal to a predetermined torque Tth, the δ-axis current command value Iδ* is zero irrespective of the steering torque T, that is, no assist force is applied. In addition, the γ-axis current command value Iγ* is fixed at zero (Iγ* = 0).

The phase current values Iu, Iv and Iw and the estimated motor rotation angle θm are input into the motor control signal output unit 43 together with the δ-axis current command value Iδ* output from the current command value calculation unit 42. The motor control signal output unit 43 executes feedback control over currents in the γ/δ coordinate system based on these parameters, thereby generating motor control signals.

Specifically, the phase current values Iu, Iv and Iw input into the motor control signal output unit 43 are input into a γ/δ conversion unit 51. The γ/δ conversion unit 51 maps the phase current values Iu, Iv and Iw onto the γ/δ coordinate system based on the estimated motor rotation angle θm, thereby calculating a γ-axis current value Iγ and a δ-axis current value Iδ. The δ-axis current value Iδ is input into a subtracter 52δ together with the δ-axis current command value Iδ* output from the current command value calculation unit 42. The γ-axis current value Iγ is input into a subtracter 52γ together with the γ-axis current command value Iγ*. The subtracters 52γ and 52δ respectively calculate a γ-axis current deviation ΔIγ and a δ-axis current deviation ΔIδ.

The γ-axis current deviation ΔIγ and the δ-axis current deviation ΔIδ are input into a F/B control unit 53γ and a F/B control unit 53δ, respectively. Then, these F/B control units 53γ and 53δ execute feedback calculation so as to cause the γ-axis current value Iγ and the δ-axis current value Iδ that are actual current values to respectively follow the γ-axis current command value Iγ* and the δ-axis current command value Iδ* output from the current command value calculation unit 42. Specifically, the F/B control units 53γ and 53δ respectively calculate a γ-axis voltage command value Vγ* and a δ-axis voltage command value Vδ* by multiplying the received γ-axis current deviation ΔIγ and the received δ-axis current deviation ΔIδ by a predetermined F/B gain and a predetermined PI gain.

The γ-axis voltage command value Vγ* and the δ-axis voltage command value Vδ* are input into a γ/δ inversion unit 54 together with the estimated motor rotation angle θm. The γ/δ inversion unit 54 maps the γ-axis voltage command value Vγ* and the δ-axis voltage command value Vδ* onto three-phase alternating current coordinates based on the estimated motor rotation angle θm, thereby calculating three-phase phase voltage command values Vu*, Vv* and Vw*. The phase voltage command values Vu*, Vv* and Vw* are input into a PWM conversion unit 55. The PWM conversion unit 55 calculates duty command values of the respective phases based on these phase voltage command values Vu*, Vv* and Vw*. The PWM conversion unit 55 generates motor control signals having on duty ratios indicated by the duty command values, and outputs the motor control signals to the drive circuit 32. Thus, driving currents corresponding to the motor control signals are output to the motor 21, and a motor torque corresponding to the driving currents is applied to the steering system as assist force.

Next, calculation of the estimated motor rotation angle according to the present embodiment will be described. The steering torque T detected by the torque sensor 27, the phase current values Iu, Iv and Iw and the phase voltage values Vu, Vv and Vw are input into the estimated motor rotation angle calculation unit 41. Then, the estimated motor rotation angle calculation unit 41 calculates an amount of change Δθm (hereinafter, referred to as "change amount Δθm") in the motor rotation angle at each calculation period based on the state quantities, and accumulates the change amounts Δθm, thereby calculating the estimated motor rotation angle θm.

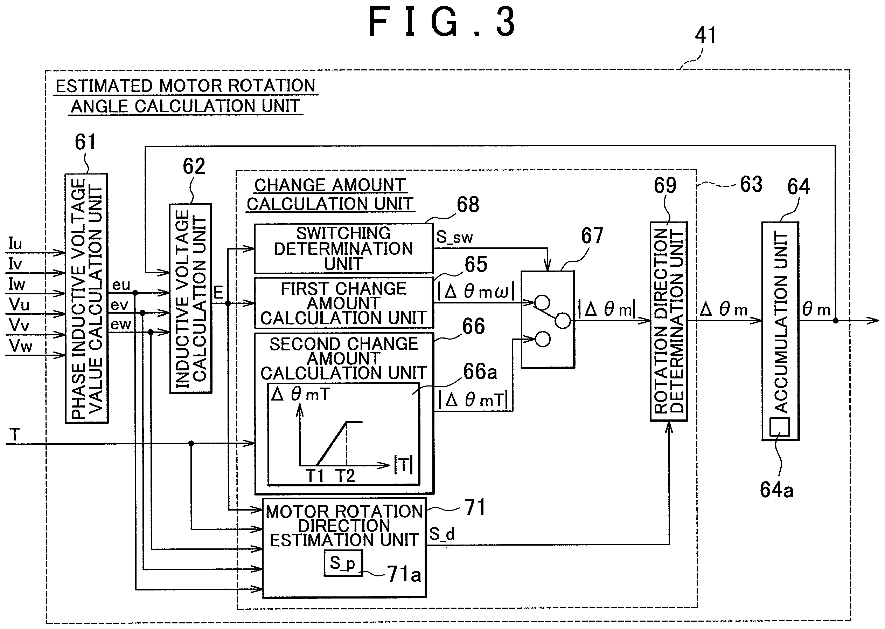

More specifically, as shown in FIG. 3, the phase current values Iu, Iv and Iw and the phase voltage values Vu, Vv and Vw input into the estimated motor rotation angle calculation unit 41 are input into a phase inductive voltage value calculation unit 61. Then, phase inductive voltage values eu, ev and ew are calculated in the phase inductive voltage value calculation unit 61. Specifically, the phase inductive voltage value calculation unit 61 estimates the phase inductive voltage values eu, ev and ew based on the phase current values Iu, Iv and Iw and the phase voltage values Vu, Vv and Vw according to Equations 1 to 3 indicated below.

$$eu = Vu - Iu \bullet Ru \qquad \text{Equation 1}$$

$$ev = Vv - Iv \bullet Rv \qquad \text{Equation 2}$$

$$ew = Vw - Iw \bullet Rw \qquad \text{Equation 3}$$

Equations 1 to 3 are known motor voltage equations, and "Ru", "Rv" and "Rw" respectively indicate the resistance values of the motor coils 33u, 33v and 33w of the respective phases.

The phase inductive voltage values eu, ev and ew calculated in the phase inductive voltage value calculation unit 61 are input into an inductive voltage value calculation unit 62. The inductive voltage value calculation unit 62 converts the phase inductive voltage values eu, ev and ew in the three-phase alternating current coordinate system into phase inductive voltage values $e\gamma$ and $e\delta$ in the $\gamma/\delta$ coordinate system, and calculates an inductive voltage value E that is generated in the motor 21 according to Equation 4 indicated below. The inductive voltage value calculation unit 62 converts the phase inductive voltage values eu, ev and ew into the phase inductive voltage values $e\gamma$ and $e\delta$, using the estimated motor rotation angle $\theta$m calculated by an accumulation unit 64 (described later) in the immediately preceding calculation period.

$$E = \sqrt{(e\gamma^2 + e\delta^2)} \qquad \text{Equation 4}$$

The inductive voltage value E calculated in the inductive voltage value calculation unit 62 is input into a change amount calculation unit 63 that calculates a change amount $\Delta\theta$m in motor rotation angle in each calculation period. The change amount calculation unit 63 includes a first change amount calculation unit 65 and a second change amount calculation unit 66. The first change amount calculation unit 65 calculates the absolute value of a first change amount $\Delta\theta$m$\omega$ based on the inductive voltage value E. The second change amount calculation unit 66 calculates the absolute value of a second change amount $\Delta\theta$mT based on the steering torque T. When the absolute value of the inductive voltage value E is larger than a predetermined voltage value Eth, the change amount calculation unit 63 outputs the change amount $\Delta\theta$m based on the first change amount $\Delta\theta$m$\omega$, calculated by the first change amount calculation unit 65, to the accumulation unit 64. On the other hand, when the absolute value of the inductive voltage value E is smaller than or equal to the predetermined voltage value Eth, the change amount calculation unit 63 outputs the change amount $\Delta\theta$m based on the second change amount $\Delta\theta$mT, calculated by the second change amount calculation unit 66, to the accumulation unit 64. In consideration of the fact that the inductive voltage value E increases and is more stabilized as the rotation angular velocity of the motor 21 increases, the predetermined voltage value Eth is set at such a value that the inductive voltage value E is stabilized and the accuracy of the change amount $\Delta\theta$m based on the inductive voltage is ensured.

Specifically, the first change amount calculation unit 65 calculates the estimated motor rotation angular velocity $\omega$m of the motor 21 according to Equation 5.

$$\omega m = E/Ke \qquad \text{Equation 5}$$

In Equation 5, "Ke" is an inductive voltage constant (counter electromotive constant). The first change amount calculation unit 65 calculates the first change amount $\Delta\theta$m$\omega$ in each calculation period by multiplying the estimated motor rotation angular velocity $\omega$m by the calculation period, and outputs the absolute value of the first change amount $\Delta\theta$m$\omega$ to a switching control unit 67.

The second change amount calculation unit 66 has a map 66a that indicates the correlation between the steering torque T and the second change amount $\Delta\theta$mT. The second change amount calculation unit 66 calculates the second change amount $\Delta\theta$mT with reference to the map 66a, and outputs the absolute value of the second change amount $\Delta\theta$mT to the switching control unit 67. The map 66a is set such that the second change amount $\Delta\theta$mT is zero in a region in which the absolute value of the steering torque T is smaller than or equal to a predetermined first torque T1. In a region in which the absolute value of the steering torque T is larger than the first torque T1 and is smaller than or equal to a second torque T2, the second change amount $\Delta\theta$mT is set to increase in proportion to an increase in the absolute value of the steering torque T; and, in a region in which the absolute value of the steering torque T is larger than the second torque T2, the second change amount $\Delta\theta$mT is set at a constant value.

The change amount calculation unit 63 includes a switching determination unit 68. The switching determination unit 68 determines which one of the first change amount $\Delta\theta$m$\omega$ and the second change amount $\Delta\theta$mT input into the switching control unit 67 is output based on the inductive voltage value E calculated in the inductive voltage value calculation unit 62. The switching determination unit 68 determines whether the absolute value of the inductive voltage value E is larger than the predetermined voltage value Eth. When the absolute value of the inductive voltage value E is larger than the predetermined voltage value Eth, the switching determination unit 68 outputs a determination signal S_sw, indicating that the first change amount $\Delta\theta$m$\omega$ should be output, to the switching control unit 67. On the other hand, when the absolute value of the inductive voltage value E is smaller than or equal to the predetermined voltage value Eth, the switching determination unit 68 outputs a determination signal S_sw, indicating that the second change amount $\Delta\theta$mT should be output, to the switching control unit 67. Then, the switching control unit 67 outputs the absolute value of the first change amount $\Delta\theta m\omega$) or the absolute value of the second change amount $\Delta\theta mT$, depending on the determination signal S_sw, as the absolute value of the change amount $\Delta\theta m$, to a rotation direction determination unit 69.

The rotation direction determination unit 69 determines the sign of the change amount $\Delta\theta m$ (the rotation direction of the motor 21) based on the rotation direction signal S_d output from a motor rotation direction estimation unit 71 (described later), and outputs the change amount $\Delta\theta m$ to an accumulation unit 64.

Subsequently, the change amount $\Delta\theta m$ calculated in the change amount calculation unit 63 is input into the accumulation unit 64 that accumulates the change amounts $\Delta\theta m$. The accumulation unit 64 has a memory 64a that stores a value of the estimated motor rotation angle $\theta m$ in the immediately preceding calculation period. The accumulation unit 64 adds (adds or subtracts based on the sign of the change amount $\Delta\theta m$) the change amount $\Delta\theta m$ to the estimated motor rotation angle $\theta m$ in the immediately preceding calculation period, which is stored in the memory 64a, to calculate the estimated motor rotation angle $\theta m$. Then, the accumulation unit 64 outputs the calculated estimated motor rotation angle $\theta m$ to the $\gamma/\delta$ conversion unit 51, the $\gamma/\delta$ inversion unit 54 (see FIG. 2), and the inductive voltage value calculation unit 62.

At the time of turning on an ignition (at the time of start-up), a given value (for example, "0") is used as the initial value of the estimated motor rotation angle $\theta m$, and, after the motor 21 starts rotating, the estimated motor rotation angle $\theta m$ is corrected so as to approach an actual motor rotation angle based on, for example, the inductive voltage.

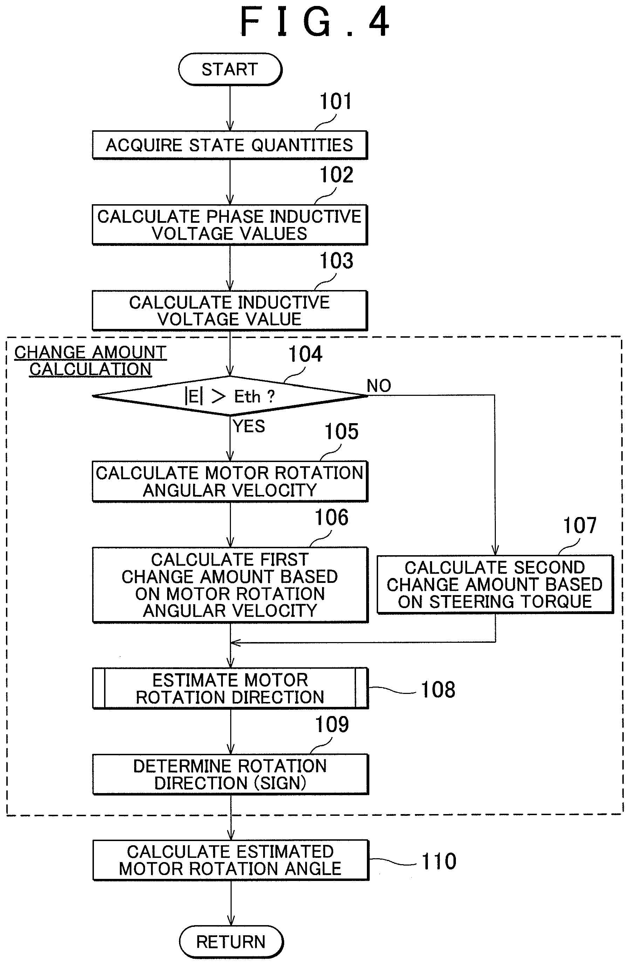

That is, as shown in the flowchart of FIG. 4, when the estimated motor rotation angle calculation unit 41 acquires the steering torque T, the phase current values Iu, Iv and Iw and the phase voltage values Vu, Vv and Vw (step 101), the estimated motor rotation angle calculation unit 41 calculates the phase inductive voltage values eu, ev and ew according to Equations 1 to 3 indicated above (step 102). Subsequently, the estimated motor rotation angle calculation unit 41 calculates the inductive voltage value E based on the phase inductive voltage values eu, ev and ew (step 103). Then, in step 104 to step 109, the change amount $\Delta\theta m$ in the motor rotation angle is calculated based on the inductive voltage value E and the steering torque T.

Specifically, the estimated motor rotation angle calculation unit 41 determines whether the absolute value of the inductive voltage value E is larger than the predetermined voltage value Eth (step 104). When the absolute value of the inductive voltage value E is larger than the predetermined voltage value Eth (YES in step 104), the estimated motor rotation angular velocity $\omega m$ is calculated according to Equation 5 indicated above (step 105), and the absolute value of the first change amount $\Delta\theta m\omega$ (change amount $\Delta\theta m$) is calculated based on the estimated motor rotation angular velocity $\omega m$ (step 106). On the other hand, when the absolute value of the inductive voltage value E is smaller than or equal to the predetermined voltage value Eth (NO in step 104), the absolute value of the second change amount $\Delta\theta mT$ (change amount $\Delta\theta m$) is calculated based on the steering torque T with reference to the map 66a (step 107). The estimated motor rotation angle calculation unit 41 estimates the motor rotation direction (step 108), and determines the sign of the change amount $\Delta\theta m$ calculated in step 106 or step 107 based on the estimated result (step 109). The estimated motor rotation angle calculation unit 41 accumulates the change amounts $\Delta\theta m$ to calculate the estimated motor rotation angle $\theta m$ (step 110).

Next, estimation of the rotation direction of the motor 21 in the EPS 1 according to the present embodiment will be described. Usually, the steering wheel 2 rotates in the direction of the steering torque T. However, the steering wheel 2 does not rotate in the direction of the steering torque T in, for example, a case where a driver grips the steering wheel 2 lightly when the driver returns the steering wheel 2, after the vehicle has turned, using self-aligning torque corresponding to road surface friction force. Therefore, if the rotation direction of the motor 21 that rotates in accordance with the rotation of the steering wheel 2 is uniquely estimated based on the direction of the steering torque T to determine the sign of the change amount $\Delta\theta m$, the estimated motor rotation angle $\theta m$ may deviate from an actual motor rotation angle. Therefore, for example, the motor 21 may vibrate, resulting in a decrease in steering feel. The rotation speed when the steering wheel 2 is returned by self-aligning torque is relatively high, and the absolute value of the inductive voltage value E is usually larger than the predetermined voltage value Eth.

In this respect, as shown in FIG. 3, the estimated motor rotation angle calculation unit 41 includes the motor rotation direction estimation unit 71 that estimates the rotation direction of the motor 21. The steering torque T, the phase inductive voltage values eu, ev and ew and the inductive voltage value E are input into the motor rotation direction estimation unit 71. When the absolute value of the inductive voltage value E is larger than the predetermined voltage value Eth, the motor rotation direction estimation unit 71 estimates the rotation direction based on the respective axis inductive voltage values e$\alpha$ and e$\beta$ in a two-phase fixed coordinate system ($\alpha/\beta$ coordinate system), and outputs the rotation direction signal S_d. The $\alpha/\beta$ coordinate system is a fixed coordinate system that is defined by an $\alpha$ axis and a $\beta$ axis perpendicular to the $\alpha$ axis with respect to the origin set at the center of the rotor (not shown).

When the absolute value of the inductive voltage value E is smaller than or equal to the predetermined voltage value Eth, the motor rotation direction estimation unit 71 determines that the motor 21 rotates in accordance with the rotation of the steering wheel 2 and the steering wheel 2 rotates in the direction of the steering torque T, and outputs the rotation direction signal S_d corresponding to the sign (direction) of the steering torque T detected by the torque sensor 27.

When the absolute value of the inductive voltage value E is larger than the predetermined voltage value Eth, the motor rotation direction estimation unit 71 maps the phase inductive voltage values eu, ev and ew onto the $\alpha/\beta$ coordinate system to calculate (estimate) an $\alpha$-axis inductive voltage value e$\alpha$ as the axis inductive voltage value of the first coordinate axis, and a $\beta$-axis inductive voltage value e$\beta$ as the axis inductive voltage value of the second coordinate axis. Then, the motor rotation direction estimation unit 71 estimates the rough rotational position of the motor 21 based on the $\alpha$-axis inductive voltage value e$\alpha$ and the $\beta$-axis inductive voltage value e$\beta$, and estimates the rotation direction of the motor 21 based on the change in the rough rotational position.

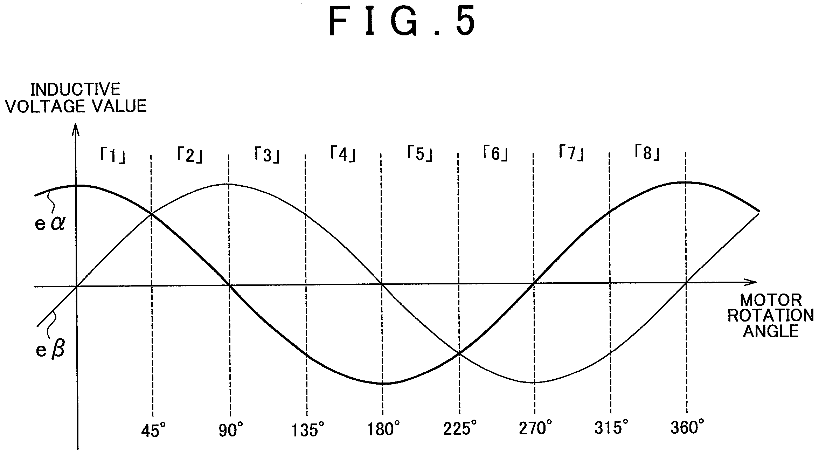

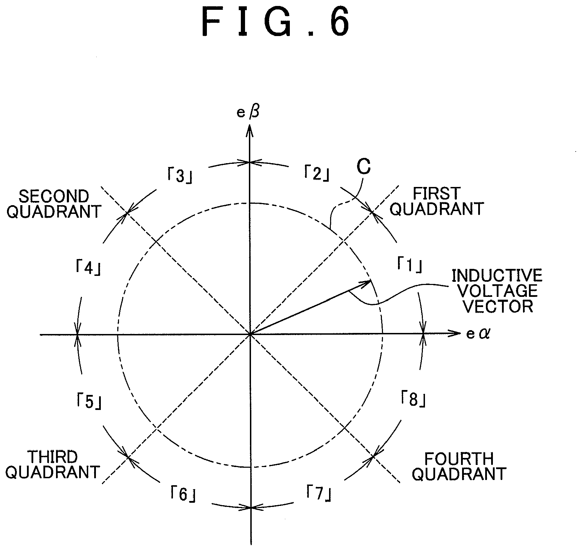

As shown in FIG. 5, the axis inductive voltage values e$\alpha$ and e$\beta$ each change in a sinusoidal waveform in accordance with the rotation of the motor 21. The waveform of the $\alpha$-axis inductive voltage value e$\alpha$ and the waveform of the $\beta$-axis inductive voltage value e$\beta$ have a phase difference of 90° in electric angle. That is, as shown in FIG. 6, the inductive voltage vector having the axis inductive voltage values e$\alpha$ and e$\beta$ as its components rotates in a circle C on the $\alpha/\beta$ coordinate system.

There are four quadrants (first to fourth quadrants in the $\alpha/\beta$ coordinate system) obtained by dividing a plane of coordinate into four regions at intervals of 90°. In which of the four quadrants the motor rotation angle (the angle of the inductive voltage vector with respect to the $\alpha$ axis) is located is determined based on a combination of the signs of the axis inductive voltage values e$\alpha$ and e$\beta$. In other words, the combination of the signs of the axis inductive voltage values e$\alpha$ and e$\beta$ changes depending on in which of the first to fourth quadrants the motor rotation angle is located. Specifically, when both the signs of the axis inductive voltage values e$\alpha$ and e$\beta$ are positive (+), the motor rotation angle is in the first quadrant on the $\alpha/\beta$ coordinate system. When the sign of the $\alpha$-axis inductive voltage value e$\alpha$ is negative (-) and the sign of the $\beta$-axis inductive voltage value e$\beta$ is positive (+), the motor rotation angle is in the second quadrant. When both the signs of the axis inductive voltage values e$\alpha$ and e$\beta$ are negative (-), the motor rotation angle is in the third quadrant. When the sign of the $\alpha$-axis inductive voltage value e$\alpha$ is positive (+) and the sign of the $\beta$-axis inductive voltage value e$\beta$ is negative (-), the motor rotation angle is in the fourth quadrant.

Each of the first to fourth quadrants is equally divided into two regions to obtain regions "1" to "8" shown in FIG. 6. In which of the two regions of each quadrant the motor rotation angle is located is determined based on the magnitude relation between the absolute value of the $\alpha$-axis inductive voltage value e$\alpha$ and the absolute value of the $\beta$-axis inductive voltage value e$\beta$. In other words, when the motor rotation angle is in one of the first quadrant to the fourth quadrant, the magnitude relation between the absolute value of the $\alpha$-axis inductive voltage value e$\alpha$ and the absolute value of the $\beta$-axis inductive voltage value e$\beta$ changes depending on in which of the two regions, obtained by equally dividing the quadrant into two regions, the motor rotation angle is located. For example, in the case where both the signs of the axis inductive voltage values e$\alpha$ and e$\beta$ are positive (+), when the $\alpha$-axis inductive voltage value e$\alpha$ is higher than or equal to the $\beta$-axis inductive voltage value e$\beta$, the motor rotation angle is in the region "1"; whereas, when the $\alpha$-axis inductive voltage value e$\alpha$ is lower than the $\beta$-axis inductive voltage value e$\beta$, the motor rotation angle is in the region "2".

Therefore, based on the combination of the signs of the axis inductive voltage values e$\alpha$ and e$\beta$ and the magnitude relation between the absolute values thereof, it is possible to estimate in which of the regions "1" to "8", obtained by dividing the plane of coordinates into eight regions at intervals of 45° in electric angle as shown in FIG. 5 and FIG. 6, the motor rotation angle is located. That is, the rough rotational position of the motor 21 may be detected in eight sections.

On the basis of the above-described feature, a memory 71a of the motor rotation direction estimation unit 71 stores a correspondence table that shows the relation among signs of the $\alpha$-axis inductive voltage value and the $\beta$-axis inductive voltage value, the magnitude relation between the absolute values thereof, and the rough rotational position of the motor 21. With reference to the correspondence table, the motor rotation direction estimation unit 71 obtains rough rotational position information S_p based on the axis inductive voltage values e$\alpha$ and e$\beta$. The memory 71a stores the rough rotational position information S_p that indicates the rough rotational position of the motor 21. In the present embodiment, the sign of each of the axis inductive voltage values e$\alpha$ and e$\beta$ is set to be positive when the value of the corresponding axis inductive voltage value e$\alpha$ or e$\beta$ is higher than or equal to zero, and set to be negative when the value is lower than zero. The motor rotation direction estimation unit 71 estimates the rotation direction of the motor 21 based on a manner in which the rough rotational position information S_p is changed, outputs the rotation direction signal S_d that indicates the estimated rotation direction to the rotation direction determination unit 69, and updates the rough rotational position information S_p stored in the memory 71a.

In the case where the rough rotational position of the motor 21, indicated by the rough rotational position information S_p stored in the memory 71a, is "1", for example, when the rough rotational position changes to "8", it is estimated that the motor 21 is rotating in the clockwise direction, and the rough rotational position information S_p stored in the memory 71a is updated to "8". On the other hand, for example, when the rough rotational position changes to "2", it is estimated that the motor 21 is rotating in the counterclockwise direction, and the rough rotational position information S_p stored in the memory 71a is updated to "2".

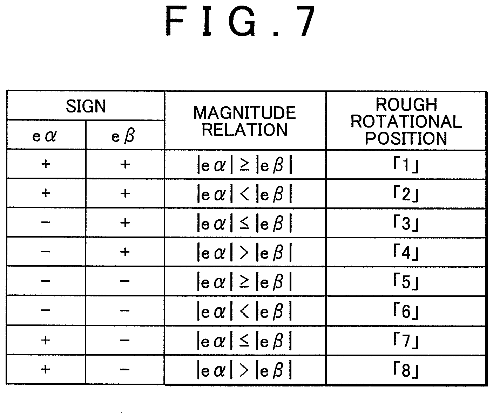

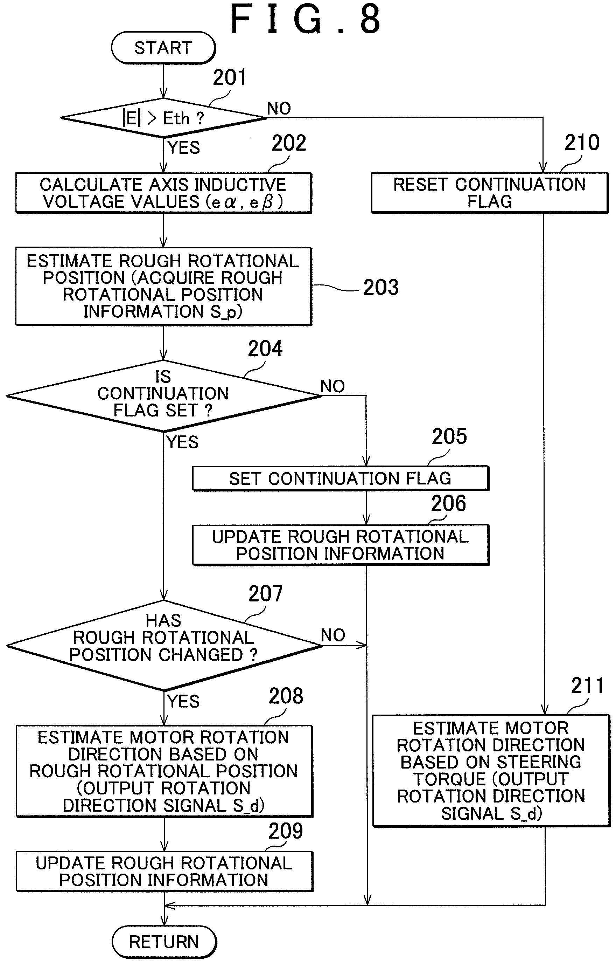

Next, the procedure of estimating the rotation direction of the motor 21, executed by the motor rotation direction estimation unit 71 according to the present embodiment, will be described with reference to the flowchart of FIG. 8. The motor rotation direction estimation unit 71 determines whether the absolute value of the inductive voltage value E is larger than the predetermined voltage value Eth (step 201). When the absolute value of the inductive voltage value E is larger than the predetermined voltage value Eth (YES in step 201), the motor rotation direction estimation unit 71 calculates the axis inductive voltage values eα and eβ (step 202). Subsequently, the motor rotation direction estimation unit 71 estimates the rough rotational position with reference to the correspondence table shown in FIG. 7 to acquire the rough rotational position information S_p (step 203). Then, the motor rotation direction estimation unit 71 determines whether a continuation flag that indicates that the absolute value of the inductive voltage value E is continuously larger than the predetermined voltage value Eth is set (step 204).

When the continuation flag is not set (NO in step 204), the motor rotation direction estimation unit 71 sets the continuation flag (step 205), and updates the rough rotational position information S_p stored in the memory 71a (step 206). On the other hand, when the continuation flag is set (YES in step 204), the motor rotation direction estimation unit 71 determines whether the rough rotational position estimated in step 203 has changed from the rough rotational position indicated by the rough rotational position information S_p stored in the memory 71a (step 207). When the rough rotational position has changed (YES in step 207), the motor rotation direction estimation unit 71 estimates the rotation direction of the motor 21 based on that change, and outputs the rotation direction signal S_d (step 208). Then, the motor rotation direction estimation unit 71 updates the rough rotational position information S_p stored in the memory 71a to the information obtained in step 203 (step 209). On the other hand, when the rough rotational position has not changed (NO in step 207), the processes of steps 208 and 209 are not executed.

When the absolute value of the inductive voltage value E is smaller than or equal to the predetermined voltage value Eth (NO in step 201), the motor rotation direction estimation unit 71 resets the continuation flag (step 210), and then estimates the rotation direction of the motor 21 based on the steering torque T and outputs the rotation direction signal S_d (step 210). The process of step 203 may function as a rough rotational position estimation unit, and the process of step 208 may function as a rotation direction estimation unit.

As described above, according to the present embodiment, the following advantageous effects are obtained.

1) When the absolute value of the inductive voltage value E is larger than the predetermined voltage value Eth, the motor rotation direction estimation unit 71 estimates the rough rotational position of the motor 21 based on the combination of the signs of the axis inductive voltage values eα and eβ and the magnitude relation between the absolute values thereof, and estimates the rotation direction of the motor 21 based on a change in the rough rotational position. The axis inductive voltage values eα and eβ change in sinusoidal waveforms having a phase difference of 90°. Therefore, it is possible to estimate in which of the regions "1" to "8", obtained by dividing the plane of coordinates into eight regions at intervals of 45° in electric angle, the motor rotation angle is located, that is, it is possible to estimate the rough rotational position of the motor 21, based on the combination of the signs of the axis inductive voltage values eα and eβ and the magnitude relation between the absolute values thereof. Because the rough rotational position is detectable in eight sections, it is possible to estimate the rotation direction of the motor 21 based on a change in the rough rotational position. As described above, according to the present embodiment, the sign of the change amount Δθm (the rotation direction of the motor) is determined depending on the rotation direction based on the axis inductive voltage values eα and eβ that change in accordance with the rotation of the motor 21. Therefore, according to the present embodiment, it is possible to accurately estimate the motor rotation angle, as compared with the case where the sign of the change amount Δθm is determined based on a parameter of which the relation with the rotation direction of the motor 21 is not constant, such as the steering torque T. Even in a state where the direction of the steering torque does not coincide with the rotation direction of the steering wheel 2, it is possible to accurately estimate the rotation direction of the motor 21, thereby accurately estimating the motor rotation angle. Therefore, it is possible to provide the EPS with which, for example, vibrations are suppressed and excellent steering feel is achieved. In the above configuration, the rotation direction of the motor 21 is estimated according to the rough rotational position estimated based on the combination of the signs of the axis inductive voltage values eα and eβ and the magnitude relation of the absolute values thereof. Therefore, the calculation load is low as compared with the case where the rotation direction is estimated through complex calculation using, for example, a trigonometric function.

2) According to the present embodiment, the rough rotational position is estimated based on the combination of the signs of the axis inductive voltage values eα and eβ and the magnitude relation between the absolute values thereof. Therefore, the angular range of the rough rotational position is divided into more regions than those in the case where the rough rotational position of the motor 21 is estimated based only on the combination of the signs. This makes it possible to quickly estimate the rotation direction of the motor.

The above-described embodiment may be modified into the following alternative embodiments.

In the above-described embodiment, the first change amount calculation unit 65 calculates the first change amount $\Delta\theta m\omega$ using the estimated motor rotation angular velocity $\omega m$ based on the inductive voltage value E. However, the invention is not limited to this configuration. The motor rotation angular velocity may be calculated based on time at which the rough rotational position of the motor 21 changes, and the first change amount $\Delta\theta m\omega$) may be calculated using the motor rotation angular velocity.

In the above-described embodiment, in which of the regions "1" to "8" the motor rotation angle is located is estimated based on the combination of the signs of the axis inductive voltage values $e\alpha$ and $e\beta$ and the magnitude relation between the absolute values thereof, and thus the rough rotational position is estimated in eight sections. However, the invention is not limited to this configuration. For example, in which of the first quadrant to the fourth quadrant on the $\alpha/\beta$ coordinate system the motor rotation angle is located may be estimated based only on the combination of the signs of the axis inductive voltage values $e\alpha$ and $e\beta$, and thus the rough rotational position may be estimated in four sections.

In the above-described embodiment, the sings of the axis inductive voltage values $e\alpha$ and $e\beta$ each are set to be positive when the value of the corresponding axis inductive voltage value $e\alpha$ or $e\beta$ is higher than or equal to zero, and set to be negative when the value is lower than zero. However, the axis inductive voltage values $e\alpha$ and $e\beta$ sometimes do not change in a smooth sinusoidal waveform due to the influence of, for example, noise, and change in a turbulent waveform. If the waveforms of the axis inductive voltage values $e\alpha$ and $e\beta$ become turbulent around zero, there is a possibility that the signs of the axis inductive voltage values $e\alpha$ and $e\beta$ change irrespective of a change in an actual motor rotation angle and the rough rotational position changes. As a result, the rotation direction of the motor 21 may be erroneously estimated.

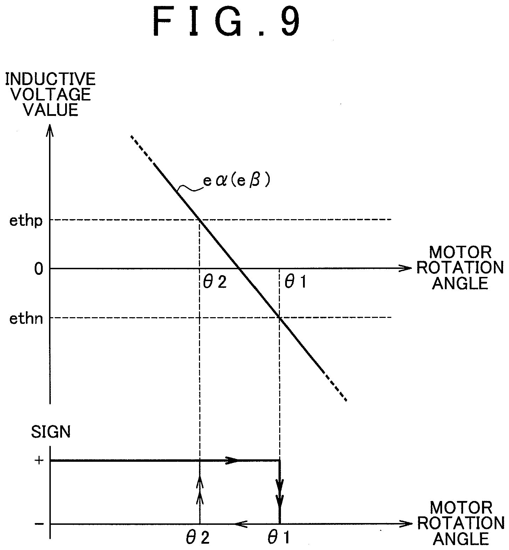

In consideration of this, for example, as shown in FIG. 9, as thresholds at which the signs of the axis inductive voltage values $e\alpha$ and $e\beta$ change, a negative-side threshold ethn used when the sign changes from positive to negative may be set to be smaller than zero and a positive-side threshold ethp used when the sign changes from negative to positive may be set to be larger than zero to provide hysteresis for changes in these signs. With this configuration, when the sign of the $\alpha$-axis inductive voltage value $e\alpha$ ($\beta$-axis inductive voltage value $e\beta$) is positive, the sign does not change even when the value becomes lower than zero, and the sign becomes negative at a rotation angle $\theta1$ at which the $\alpha$-axis inductive voltage value $e\alpha$ is smaller than or equal to the negative-side threshold ethn. On the other hand, when the sign of the $\alpha$-axis inductive voltage value $e\alpha$ ($\beta$-axis inductive voltage value $e\beta$) is negative, the sign does not change even when the value becomes higher than zero, and the sign becomes positive at a rotation angle $\theta2$ at which the $\alpha$-axis inductive voltage value $e\alpha$ is larger than or equal to the positive-side threshold ethp. With the above configuration, due to the hysteresis provided for changes in the signs of the axis inductive voltage values $e\alpha$ and $e\beta$, even when the waveforms of the axis inductive voltage values $e\alpha$ and $e\beta$ become turbulent around zero due to the influence of, for example, noise, the signs of the axis inductive voltage values $e\alpha$ and $e\beta$ are hard to change. Thus, it is possible to prevent the rotation direction of the motor 21 from being erroneously estimated, and therefore it is possible to estimate the motor rotation angle with high accuracy.

In the above-described embodiment, the rotation direction of the motor 21 is estimated based on the rough rotational position only when the absolute value of the inductive voltage value E is larger than the predetermined voltage value Eth. However, the invention is not limited to this configuration. The rotation direction of the motor 21 may be estimated based on the rough rotational position irrespective of the absolute value of the inductive voltage value E.

In the above-described embodiment, a given value is used as the initial value of the estimated motor rotation angle $\theta m$ at the start-up. However, the invention is not limited to this configuration. For example, phase fixed current application, in which current is supplied in a predetermined fixed current application pattern at the time of start-up, may be executed, and the motor rotation angle corresponding to the current application pattern may be used as the initial value.

In the above-described embodiments, the invention is applied to the EPS that uses the sensorless motor 21, provided with no rotation angle sensor, as a driving source. However, the invention is not limited to this configuration. The invention may be applied to an EPS 1 that uses a motor provided with a rotation angle sensor as a driving source, and the above-described sensorless control may be executed when the rotation angle sensor is malfunctioning.

In the above-described embodiments, the invention is implemented in the ECU 23 that serves as the motor control unit that controls the motor 21 that is the driving source of the EPS actuator 22. However, the invention is not limited to this configuration. For example, the invention may be implemented in a motor control unit that controls another motor, such as a motor of a variable transmission ratio device that transmits the rotation, obtained by adding the rotation generated by driving the motor to the rotation of an input shaft generated by a steering operation, to an output shaft using a differential mechanism.

In a motor control unit able to accurately estimate a motor rotation angle and a vehicle steering system including the motor control unit, a motor rotation direction estimation unit estimates the rough rotational position of a motor based on the combination of the signs of axis inductive voltage values (eα and eβ) and the magnitude relation between the absolute values thereof when the absolute value of an inductive voltage value (E) is larger than a predetermined voltage value (Eth), and estimates the rotation direction of the motor based on a change in the rough rotational position.

## Claims

1. A motor control unit (23) that includes
   a motor control signal output unit (43) that is configured to output a motor control signal,
   a drive circuit (32) that is configured to supply driving current to a motor (21) based on the motor control signal, and
   an estimated motor rotation angle calculation unit (41) that is configured to accumulate change amounts ($\Delta\theta$m) of a motor rotation angle in each calculation period to calculate an estimated motor rotation angle ($\theta$m), wherein
   the motor control signal output unit (43) is configured to output the motor control signal based on the estimated motor rotation angle ($\theta$m), the motor control unit (23) being **characterized by** comprising:

      a rough rotational position estimation unit that is configured to estimate a rough rotational position of the motor (21) based on a combination of a sign of an axis inductive voltage value ($e_{\alpha}$) of a first coordinate axis and a sign of an axis inductive voltage value of a second coordinate axis ($e_{\beta}$) on a two-phase fixed coordinate system, and a magnitude relation between the axis inductive voltage value of the first coordinate axis and the axis inductive voltage value of the second coordinate axis, wherein the rough rotational position estimation unit is configured to estimate in which of eight regions, obtained by dividing the plane of coordinates into eight regions at intervals of 45° in electric angle, the motor rotation angle is located; and
      a rotation direction estimation unit (71) that is configured to estimate a rotation direction of the motor (21) based on a change in the rough rotational position, estimated by the rough rotational position estimation unit, wherein the estimated motor rotation angle calculation unit (41) is configured to determine a sign of the change amount ($\Delta\theta$m) based on the rotation direction of the motor (21), estimated by the rotation direction estimation unit (71),

wherein the estimated motor rotation angle calculation unit (41) is configured to accumulate change amounts ($\Delta\theta$m) of the motor rotation angle in each calculation period to calculate an estimated motor rotation angle ($\theta$m) by adding or subtracting, based on the determined sign of the change amount, the change amount to a value of the motor rotation angle in an immediately preceding calculation period.

2. The motor control unit (23) according to claim 1, wherein
   the motor control unit (23) is configured to use, as thresholds at which the signs of the axis inductive voltage values ($e_{\alpha}$, $e_{\beta}$) change, a negative-side threshold (ethn) when each of the signs changes from positive to negative, the negative-side threshold (ethn) being set to be smaller than zero, and a positive-side threshold (ethp) when each of the signs changes from negative to positive, the positive-side threshold (ethp) being set to be larger than zero.

3. A vehicle steering system (1) comprising the motor control unit (23) according to claim 1 or 2.

## Patentansprüche

1. Motorsteuerungseinheit (23), die
   eine Motorsteuerungssignal-Ausgabeeinheit (43), die konfiguriert ist, ein Motorsteuerungssignal auszugeben,
   eine Antriebsschaltung (32), die konfiguriert ist, einen Antriebsstrom einem Motor (21) auf der Grundlage des Motoransteuerungssignals zuzuführen, und
   eine Schätzmotordrehwinkel-Berechnungseinheit (41) aufweist, die konfiguriert ist, Änderungsgrößen ($\Delta\theta$m) eines Motordrehwinkels in jeder Berechnungsperiode zur Berechnung eines geschätzten Motordrehwinkels ($\theta$m) zu akkumulieren, wobei
   die Motorsteuerungssignal-Ausgabeeinheit (43) konfiguriert ist, das Motorsteuerungssignal auf der Grundlage des geschätzten Motordrehwinkels ($\theta$m) auszugeben, wobei die Motorsteuerungseinheit (23) **gekennzeichnet ist durch:**

      eine Grob-Drehpositions-Schätzeinheit, die konfiguriert ist, eine grobe Drehposition des Motors (21) auf der Grundlage einer Kombination eines Vorzeichen eines Achsen-Induktionsspannungswerts ($e_{\alpha}$) einer ersten Koordinatenachse und eines Vorzeichens eines Achsen-Induktionsspannungswerts ($e_{\beta}$) einer zweiten Koordinatenachse in einem festen Zwei-Phasen-Koordinatensystem und einer Betragsbeziehung zwischen dem Achsen-Induktionsspannungswert der ersten Koordinatenachse und dem Achsen-Induktionsspannungswert zu schätzen, wobei die Grob-Drehpositions-Schätzeinheit konfiguriert ist, zu schätzen, in welcher von acht Regionen, die **durch** Aufteilen der Ebene der Koordinaten in acht Regionen zu Intervallen von 45° im elektrischen Winkel erhalten werden, der Motordrehwinkel sich befindet, und eine Drehrichtungsschätzeinheit **(71),** die konfiguriert ist, eine Drehrichtung des Motors **(21)** auf der Grundlage einer Änderung in der **durch** die Grob-Drehpositions-Schätzeinheit geschätzten groben Drehposition zu schätzen, wobei

die Schätzmotordrehwinkel-Berechnungseinheit **(41)** konfiguriert ist, ein Vorzeichen der Änderungsgröße (Δθ**m**) auf der Grundlage der **durch** die Drehrichtungsschätzeinheit **(71)** geschätzten Drehrichtung des Motors **(21)** zu bestimmen,

wobei die Schätzmotordrehwinkel-Berechnungseinheit **(41)** konfiguriert ist, Änderungsgrößen (Δθ**m**) des Motordrehwinkels in jeder Berechnungsperiode zur Berechnung eines geschätzten Motordrehwinkels (θ**m**) durch Addieren oder Subtrahieren, auf der Grundlage des bestimmten Vorzeichens der Änderungsgröße, der Änderungsgröße zu einem Wert des Motordrehwinkels in einer unmittelbar vorhergehenden Berechnungsperiode zu akkumulieren.

2. Motorsteuerungseinheit **(23)** nach Anspruch 1, wobei

die Motorsteuerungseinheit **(23)** konfiguriert ist, als Schwellwerte, bei denen sich die Vorzeichen der Achsen-Induktionsspannungswerts (**e**$_\alpha$, **e**$_\beta$) ändern, einen negativseitigen Schwellwert **(ethn)** zu verwenden, wenn jedes der Vorzeichen sich von positiv auf negativ sich ändern, wobei der negativseitiges Schwellwert **(ethn)** eingestellt ist, kleiner als null zu sein, und einen positivseitigen Schwellwert **(ethp)** zu verwenden, wenn jedes der Vorzeichen sich von negativ auf positiv ändert, wobei der positivseitige Schwellwert **(ethp)** eingestellt ist, dass er größer als null ist.

3. Fahrzeuglenksystem **(1)** mit der Motorsteuerungseinheit **(23)** nach Anspruch 1 oder 2.

**Revendications**

1. Unité de commande de moteur (23) qui comporte une unité de sortie de signal de commande de moteur (43) qui est configurée pour délivrer un signal de commande de moteur,
un circuit d'attaque (32) qui est configuré pour fournir un courant d'attaque à un moteur (21) sur la base du signal de commande de moteur, et

une unité de calcul d'angle de rotation de moteur estimé (41) qui est configurée pour accumuler des quantités de variations (Δθm) d'un angle de rotation de moteur dans chaque période de calcul pour calculer un angle de rotation de moteur estimé (θm), dans laquelle

l'unité de sortie de signal de commande de moteur (43) est configurée pour délivrer le signal de commande de moteur sur la base de l'angle de rotation de moteur estimé (θm), l'unité de commande de moteur (23) étant **caractérisée en ce qu'**elle comprend :

une unité d'estimation de position de rotation approximative qui est configurée pour estimer une position de rotation approximative du moteur (21) sur la base d'une combinaison d'un signe d'une valeur de tension inductive d'axe (α) d'un premier axe de coordonnées et un signe d'une valeur de tension inductive d'axe (β) d'un second axe de coordonnées sur un système de coordonnées fixe biphasé, et une relation de grandeur entre la valeur de tension inductive d'axe du premier axe de coordonnées et la valeur de tension inductive d'axe du second axe de coordonnées, dans laquelle l'unité d'estimation de position de rotation approximative est configurée pour estimer dans laquelle des huit régions, obtenues en divisant le plan des coordonnées en huit régions à intervalles de 45° en angle électrique, est situé l'angle de rotation de moteur ; et

une unité d'estimation de direction de rotation (71) qui est configurée pour estimer une direction de rotation du moteur (21) sur la base d'une variation de la position de rotation approximative, estimée par l'unité d'estimation de position de rotation approximative, dans laquelle

l'unité de calcul d'angle de rotation de moteur estimé (41) est configurée pour déterminer un signe de la quantité de variation (Δθm) sur la base de la direction de rotation du moteur (21), estimée par l'unité d'estimation de direction de rotation (71),

dans laquelle l'unité de calcul d'angle de rotation de moteur estimé (41) est configurée pour accumuler des quantités de variations (Δθm) de l'angle de rotation de moteur dans chaque période de calcul pour calculer un angle de rotation de moteur estimé (θm) en ajoutant ou en soustrayant, sur la base du signe déterminé de la quantité de variation, la quantité de variation à une valeur de l'angle de rotation de moteur dans une période de calcul immédiatement précédente.

2. Unité de commande de moteur (23) selon la revendication 1, dans laquelle

**EP 2 530 829 B1**

l'unité de commande de moteur (23) est configurée pour utiliser, comme seuils auxquels varient les signes des valeurs de tension inductive d'axe ($\alpha$, $\beta$), un seuil côté négatif (ethn) lorsque chacun des signes passe de positif à négatif, où le seuil côté négatif (ethn) est réglé pour être inférieur à zéro, un seuil côté positif (ethp) lorsque chacun des signes passe de négatif à positif, où le seuil côté positif (ethp) est réglé pour être supérieur à zéro.

3. Système de direction de véhicule (1) comprenant l'unité de commande de moteur (23) selon la revendication 1 ou 2.

F I G . 1

# FIG. 2

EP 2 530 829 B1

# FIG.3

ESTIMATED MOTOR ROTATION ANGLE CALCULATION UNIT — 41

PHASE INDUCTIVE VOLTAGE VALUE CALCULATION UNIT — 61

Inputs: Iu, Iv, Iw, Vu, Vv, Vw, T

INDUCTIVE VOLTAGE CALCULATION UNIT — 62

CHANGE AMOUNT CALCULATION UNIT — 63

SWITCHING DETERMINATION UNIT — 68, $S\_sw$

FIRST CHANGE AMOUNT CALCULATION UNIT — 65, $|\Delta\theta m\omega|$

SECOND CHANGE AMOUNT CALCULATION UNIT — 66, 66a, $|\Delta\theta mT|$, $\Delta\theta mT$, $|T|$, T1 T2

MOTOR ROTATION DIRECTION ESTIMATION UNIT — 71, 71a, $S\_d$, Sp

67 — $|\Delta\theta ml|$

ROTATION DIRECTION DETERMINATION UNIT — 69

$\Delta\theta m$

ACCUMULATION UNIT — 64, 64a

$\theta m$

# FIG.4

```
        ( START )
            │
            ▼                          101
┌──────────────────────────────┐
│  ACQUIRE STATE QUANTITIES     │
└──────────────────────────────┘
            │                          102
            ▼
┌──────────────────────────────┐
│  CALCULATE PHASE INDUCTIVE    │
│      VOLTAGE VALUES           │
└──────────────────────────────┘
            │                          103
            ▼
┌──────────────────────────────┐
│     CALCULATE INDUCTIVE       │
│       VOLTAGE VALUE           │
└──────────────────────────────┘
            │
```

CHANGE AMOUNT
CALCULATION                          104

```
            ◇ |E| > Eth ? ◇──── NO ──────┐
            │ YES                          │
            ▼              105            │
┌──────────────────────────────┐         │
│  CALCULATE MOTOR ROTATION     │         │
│     ANGULAR VELOCITY          │         │
└──────────────────────────────┘         │
            │              106            │                107
            ▼                             ▼
┌──────────────────────────────┐  ┌──────────────────────────┐
│     CALCULATE FIRST           │  │   CALCULATE SECOND        │
│  CHANGE AMOUNT BASED          │  │  CHANGE AMOUNT BASED      │
│   ON MOTOR ROTATION           │  │   ON STEERING TORQUE      │
│   ANGULAR VELOCITY            │  └──────────────────────────┘
└──────────────────────────────┘         │
            │◄────────────────────────────┘
            ▼
┌──────────────────────────────┐
││    ESTIMATE MOTOR            │── 108
││   ROTATION DIRECTION         │
└──────────────────────────────┘
            │              109
            ▼
┌──────────────────────────────┐
│   DETERMINE ROTATION          │
│     DIRECTION (SIGN)          │
└──────────────────────────────┘
            │
            ▼
┌──────────────────────────────┐
│   CALCULATE ESTIMATED         │── 110
│  MOTOR ROTATION ANGLE         │
└──────────────────────────────┘
            │
            ▼
        ( RETURN )
```

# FIG.5

EP 2 530 829 B1

# F I G . 6

# F I G . 7

| SIGN | | MAGNITUDE RELATION | ROUGH ROTATIONAL POSITION |
|:---:|:---:|:---:|:---:|
| $e\alpha$ | $e\beta$ | | |
| + | + | $|e\alpha| \geq |e\beta|$ | 「1」 |
| + | + | $|e\alpha| < |e\beta|$ | 「2」 |
| − | + | $|e\alpha| \leq |e\beta|$ | 「3」 |
| − | + | $|e\alpha| > |e\beta|$ | 「4」 |
| − | − | $|e\alpha| \geq |e\beta|$ | 「5」 |
| − | − | $|e\alpha| < |e\beta|$ | 「6」 |
| + | − | $|e\alpha| \leq |e\beta|$ | 「7」 |
| + | − | $|e\alpha| > |e\beta|$ | 「8」 |

# F I G . 8

```
              START
                │
                ▼         201
          ┌─────────────┐   NO
          │  |E| > Eth ? │──────────────────────────────┐
          └─────────────┘                               │
                │ YES      202                          │ 210
                ▼                                        ▼
  ┌──────────────────────────┐          ┌──────────────────────────┐
  │ CALCULATE AXIS INDUCTIVE  │          │   RESET CONTINUATION      │
  │ VOLTAGE VALUES (eα, eβ)   │          │          FLAG             │
  └──────────────────────────┘          └──────────────────────────┘
                │                                        │
                ▼                                        │
  ┌──────────────────────────┐                          │
  │ ESTIMATE ROUGH ROTATIONAL │  203                     │
  │ POSITION (ACQUIRE ROUGH   │                          │
  │ ROTATIONAL POSITION       │                          │
  │ INFORMATION S_p)          │                          │
  └──────────────────────────┘                          │
                │         204                            │
                ▼                                        │
          ┌─────────────┐   NO                           │
          │     IS       │────────┐                      │
          │ CONTINUATION │        │                      │
          │  FLAG SET ?  │        │                      │
          └─────────────┘        │                      │
                │ YES            ▼        205            │
                │        ┌──────────────────────────┐    │
                │        │  SET CONTINUATION FLAG    │    │
                │        └──────────────────────────┘    │
                │                 │        206            │
                │                 ▼                       │
                │        ┌──────────────────────────┐    │
                │        │ UPDATE ROUGH ROTATIONAL   │    │
                │        │ POSITION INFORMATION      │    │
                │        └──────────────────────────┘    │
                │         207     │                       │
                ▼                 │                       │
          ┌─────────────┐   NO    │                       │
          │     HAS      │────────┼───────┐              │
          │ ROUGH ROTATIONAL      │       │              │
          │ POSITION CHANGED ?    │       │              │
          └─────────────┘         │       │         211  │
                │ YES      208     │       ▼              ▼
                ▼                  │  ┌──────────────────────────┐
  ┌──────────────────────────┐    │  │   ESTIMATE MOTOR          │
  │ ESTIMATE MOTOR ROTATION   │    │  │ ROTATION DIRECTION        │
  │ DIRECTION BASED ON        │    │  │ BASED ON STEERING         │
  │ ROUGH ROTATIONAL POSITION │    │  │ TORQUE (OUTPUT            │
  │ (OUTPUT ROTATION          │    │  │ ROTATION DIRECTION        │
  │ DIRECTION SIGNAL S_d)     │    │  │ SIGNAL S_d)               │
  └──────────────────────────┘    │  └──────────────────────────┘
                │         209      │              │
                ▼                  │              │
  ┌──────────────────────────┐    │              │
  │ UPDATE ROUGH ROTATIONAL   │    │              │
  │ POSITION INFORMATION      │    │              │
  └──────────────────────────┘    │              │
                │                  │              │
                ▼◄─────────────────┴──────────────┘
            RETURN
```

# FIG.9

INDUCTIVE VOLTAGE VALUE

ethp

0

ethn

eα(eβ)

θ2

θ1

MOTOR ROTATION ANGLE

SIGN

+

−

θ2

θ1

MOTOR ROTATION ANGLE

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011051537 A

- EP 2282401 A1